# EUROPÄISCHE PATENTSCHRIFT

(11) **EP 0 655 510 B1**
(45) Veröffentlichungstag und Bekanntmachung des Hinweises auf die Patenterteilung: **06.05.1998**
(21) Anmeldenummer: 94117994.7
(22) Anmeldetag: 15.11.1994
(51) Int. Cl.: C22B 3/08, C22B 3/02

(54) **Vorrichtung zur Auflösung von Zink mittels säurehaltiger flüssiger Elektrolyten**
Apparatus for dissolving zinc using acidic liquid electrolytes
Appareil de dissolution de zinc avec électrolyte liquide acide

(30) Priorität: 27.11.1993 DE 4340439
(43) Veröffentlichungstag der Anmeldung: 31.05.1995
(73) Patentinhaber: SMS SCHLOEMANN-SIEMAG AKTIENGESELLSCHAFT, 40237 Düsseldorf (DE)
(72) Erfinder: Schimion, Werner, D-57271 Hilchenbach (DE); Gläsker, Ulrich, D-57271 Hilchenbach (DE); Heider, Herbert, D-57223 Kreuztal (DE)
(74) Vertreter: Valentin, Ekkehard, Dipl.-Ing.

(56) Entgegenhaltungen:
- EP-A- 0 263 539
- DE-A- 3 227 240
- US-A- 4 171 250

## Beschreibung

Die Erfindung bezieht sich auf eine Vorrichtung zur Auflösung von zinkangereicherten Elektrolyten, die z. B. für die Beschichtung von Metallbändern verwendet werden. Bei bekannten Verfahren zur Auflösung von Zink z. B. für die Herstellung von elektrolytischem Zink oder hoch reinen Zinksalzen (DE-A1 32 27 240) werden zur Durchführung der einzelnen Verfahrensschritte miteinander verbindbare Mischbehälter, Sieb- und Extraktionseinrichtungen, Absetzbehälter u dergl. verwendet, in denen das zu verarbeitende Rohmaterial aufgelöst, ausgelaugt, die Laugen abgesiebt, Siebschlämme extraktiert und die entstehenden wässrigen Lösungen weiteren Behandlungen unterworfen werden. Die Herstellung von, mit Zink angereicherten elektrolytischen Flüssigkeiten für die Beschichtung von Metallbändern erfordert demgegenüber einen, vergleichsweise geringen Aufwand an Verfahrensschritten und Vorrichtungen. Eine bekannte Vorrichtung zur Auflösung von Zinkpartikeln besteht aus einem mit, einem Schwefelsäure gefüllten Elektrolytenbehälter, in den die Zinkpartikel eingebracht und in diesem aufgelöst werden. Bei diesem Lösevorgang wird die freie Säure des verwendeten Elektrolyten nach und nach verbraucht, so daß es notwendig ist, von Zeit zu Zeit frischen Elektrolyten nachzufüllen. Der Zulauf dieses frischen Elektrolyten erfolgt dabei kontinuierlich und der mit gelöstem Zink angereicherte Elektrolyt fließt in entsprechenden Mengen ab.

Beim Betrieb dieser bekannten Vorrichtungen ergeben sich eine Reihe von Nachteilen. Es entstehen bei der Auflösung des Zinks große Mengen von Wasserstoff, die im Lösebad mehr oder weniger große Turbulenzen hervorrufen. Diese Turbulenzen führen dazu, daß nicht aufgelöste Partikel des Zinks in die abfließende, mit gelöstem Zink angereicherte elektrolytische Flüssigkeit geraten. Es werden auch nichtlösliche Schmutzpartikel mitgerissen, die ebenfalls in die ablaufende Flüssigkeit geraten. Dies führt dazu, daß die z.B. für die Beschichtung von Metallbändern verwendeten, mit Zink angereicherten elektrolytischen Flüssigkeiten die aufzutragenden Beschichtungen verunreinigen. Man hat deshalb auch schon vorgeschlagen, die zinkangereicherten elektrolytischen Flüssigkeiten zunächst in Beruhigungsbehälter einzubringen, die eine Restauflösung der noch nicht vollständig gelösten Zinkpartikel und eine Sedimentation der Schmutzpartikel herbeiführen sollen. Diese Arbeitsweise erfordert aber verhältnismäßig hohe Verweilzeiten in den Beruhigungsbehältern und erfordert eine erheblich größere Menge von elektrolytischer Flüssigkeit für den Umlauf. Hinzu kommt, daß die Beruhigungsbehälter für die jeweils notwendigen Reinigungen aus dem Umlauf herausgenommen werden müssen, so daß kein kontinuierlicher Betrieb gewährleistet wird.

Der Erfindung liegt die AUfgabe zugrunde, diese bekannten Vorrichtungen so zu verbessern, dass trotz der Notwendigkeit des Ausbringens von Schmutz und Zinkpartikelresten und der Ableitung entstehender Gase ein kontinuierlicher Betrieb der Vorrichtung unter Verwendung nur eines Aufnahmebehälters ermöglicht wird.

Diese Aufgabe wird dadurch gelöst, dass der Aufnahmebehälter in Form eines oben offenen Topfes, in seinem unteren Bereich einen Siebzwischenboden zur Auflage der Zinkpartikel-Füllung und unterhalb des Siebzwischenbodens die Zuflußeinrichtung für die frischen Elektrolyten und am oberen Öffnungsrand einen Überlauf für den zinkangereicherten Elektrolyten und außen, unter diesem Überlauf, den Topf umfassende Filter- und Auffangbehälter sowie einen, über diesen, und der Topföffnung angeordneten Gassammelraum mit Abzugseinrichtung aufweist.

Der Aufnahmebehälter, der stehend oder hängend angeordnet werden kann, wird oberhalb des Siebzwischenbodens mit Zinkpartikeln, zweckmäßig in Form von Granulat oder Pellets aufgefüllt und die frische elektrolytische Flüssigkeit von unten durch den Siebzwischenboden zugeführt. Beim Durchströmen durch die Zinkpartikelschüttung findet der Auflösungsprozeß des Zinks statt und die zinkangereicherte elektrolytische Flüssigkeit gelangt über den Überlauf und die Filter in die Auffangbehälter in den Ablauf und von dort in den Kreislauf der nachgeordneten Einrichtung zur Beschichtung.

Die auch hier infolge der bei der Wasserstoffbildung entstehenden Turbulenzen über den Überlauf mitgerissenen, nicht aufgelösten metallischen Zinkpartikel und die Schmutzpartikel werden erfindungsgemäß von Filtern aufgefangen, die aus Schüttungen von Glas- und/oder Kunststoffkugeln bestehen, diese Schüttungen befinden sich in, über den Auffangbehältern angeordneten Körben. Bei einem zylindrischen Auffangbehälter können die Auffangbehälter und die Körbe segmentförmig um den Außenumfang des Aufnahembehälters angeordnet sein und ggfs. aus, auf einem drehangetriebenen Karussellträger aufstehenden Ringkammern bestehen, die dabei nacheinander einer Entleer- und einer Füllstation für die Schüttung zugeführt werden. Es kann auch eine zwischen Entleer- und Füllstation angeordnete Reinigungsspüleinrichtung für die Kugeln der Schüttung verwendet werden. Diese Spüleinrichtung läßt sich auch bereits zwischen der Entleer- und Füllstation anordnen, so daß die gereinigten Kugeln im gleichen Arbeitsgang wieder der Füllstation zugeführt werden können. Eine andere Möglichkeit besteht erfindungsgemäß darin, die Schüttung in den Ringkammern in einer Reinigungsposition mit Spülmitteln einer Spüleinrichtung zu beaufschlagen. Im Bereich der Spüleinrichtung wird erfindungsgemäß an dem Überlauf ein Überlaufwehr angeordnet.

Bei der an erster Stelle genannten Reinigungsvorrichtung werden die Körbe langsam im Kreis bewegt und in der Entleerstation bspw. durch Kippen oder durch eine Absaugeinrichtung entleert und in der dahinter liegenden Füllstation wieder mit gereinigten Kugeln gefüllt, während bei der an zweiter Stelle genannten Reinigungseinrichtung die Kugeln in den Ringkammern verbleiben und in einer festgelegten Reinigungsposition ihres Umlaufs durch eine Spüleinrichtung mit Spülflüssigkeit beaufschlagt werden. Das Überlaufwehr verhindert dabei, daß in dieser Position elektrolytische Flüssigkeit in die Kammer gelangt. Der Spüleinrichtung kann noch eine Stickstoffzufuhrleitung zugeordnet werden.

Die Erfindung sieht weiter vor, in dem Gassammelraum oberhalb des Aufnahmebehälters eine, die Wasserstoffkonzentration der gesammelten Gase messende Meßsonde anzuordnen, die die Zufuhr des frischen Elektrolyts über Stelleinrichtungen beeinflußt und bei zu hoher Konzentration abschaltet. In den Gassammelraum kann ebenfalls eine Stickstoffzufuhrleitung münden. Der Gassammelraum ist zusätzlich mit einer Frischluftzufuhröffnung mit einer, nach innen öffnenden Pendelklappe ausgestattet.

Weiter sieht die Erfindung vor, über dem Aufnahmebehälter am Gassammelraum eine Schleuseneinrichtung für einen, auf diese aufgesetzten beweglichen Behälter für dem Aufnahmebehälter zuzuführende Zinkpartikel vorzusehen. Schließlich können unterhalb des Siebzwischenbodens im Aufnahmebehälter Blasdüsen für das Einblasen von Stickstoff angeordnet werden, und der Aufnahmebehälter kann auf Druckmeßdosen aufgesetzt sein, die über Prüf- und Vergleichseinrichtungen die Füllungsgröße des Aufnahmebehälters mit Zinkpartikeln überwachen.

Die Erfindung wird anhand des in der Zeichnung dargestellten Ausführungsbeispiels näher erläutert. In der zeichnung zeigen
- Figur 1: die Gesamtvorrichtung im Schnitt, in schematischer Darstellung
- Figur 2: eine Einzelheit zu Fig. 1 ebenfalls im Schnitt,
- Figur 3: eine andere Ausbildungsform im der Draufsicht, und
- Figur 4: einen Schnitt nach der Linie B-B durch Fig. 3.

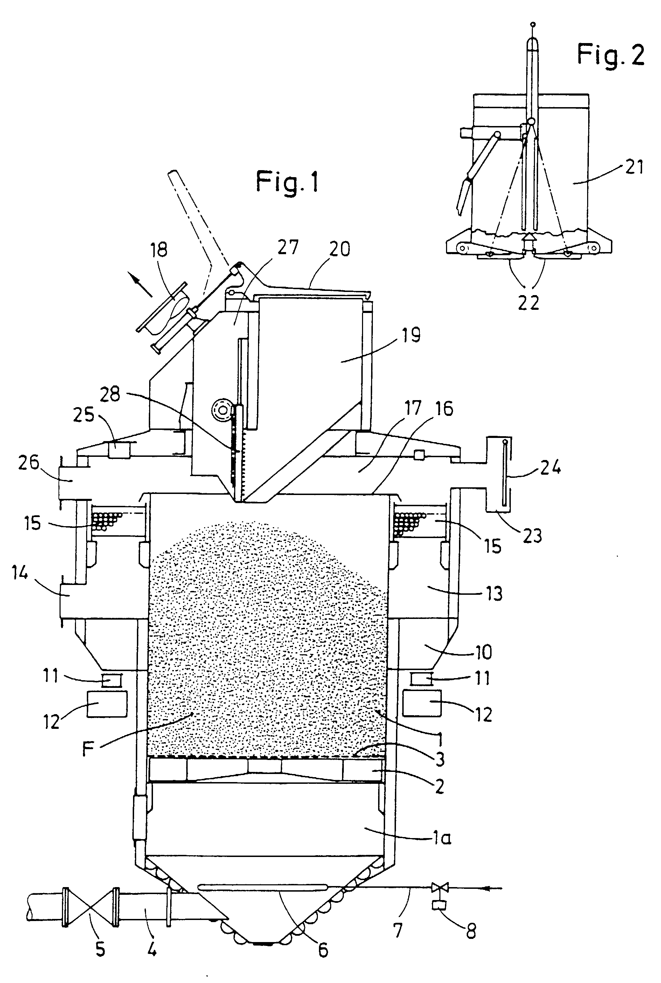

Wie aus Fig. 1 zu ersehen, ist der Aufnahmebehälter 1 als ein oben offener Zylindertopf ausgebildet, der in seinem unteren Bereich einen Zwischenboden 2 aufweist, der sich über den gesamten inneren Querschnitt erstreckt. Auf den Zwischenboden 2 ist eine feinmaschige Siebauflage 3 aufgelegt; Zwischenboden und Siebauflage 3 bilden gemeinsam einen Siebzwischenboden 2, 3. Unterhalb des Siebzwischenbodens 2, 3, im unteren Behälterteil 1a ist das Zulaufrohr 4 für die Zufuhr des frischen Elektrolyten angeordnet. Das Zulaufrohr ist mit einem motorisch betätigbaren Absperrschieber 5 ausgestattet. Weiter ist in dem unteren Behälterteil 1a ein Blasdüsensatz 6 mit einer Zufuhrleitung 7 und Absperrschieber 8 für Stickstoff angeordnet. Auf dem Siebzwischenboden 2, 3 liegt die aus Zinkpartikeln bestehende Füllung F des Aufnahmebehälters 1 auf. Um den Außenumfang des Aufnahmebehälters 1 ist eine Ringtraverse 10 gelegt, die auf Druckmeßdosen 11 aufliegt, die von ortsfesten Tragbalken 12 getragen werden.

Die Ringtraverse 10 trägt eine, ebenfalls ringförmige Überlaufkammer 13 mit einem Ablauf 14. Oberhalb der Überlaufkammer 13 sind kreissegmentförmige, heraushebbare Körbe 15 angeordnet, die eine Schüttung von Glas- bzw. Kunststoffkugeln aufnehmen. Der obere Öffnungsrand des Aufnahmebehälters 1 weist eine abgewinkelte Überlaufkante 16 auf.

Oberhalb des Aufnahmebehälters 1 ist ein domförmiger Gassammelraum 17 angeordnet, der in seinem oberen Bereich eine Absaugleitung 18 aufweist. Ferner befindet sich in dem oberen Bereich des Gassammelraums 17 eine Schleusenkammer 19 mit einer Verschlußklappe 20, auf die der in Fig. 2 wiedergegebene Füllbehälter 21 mit in dessen Bodenbereich angeordneten Entleerklappen 22 aufsetzbar ist. Weiter weist der Gassammelraum 17 noch einen Frischluftzufuhreingang 23 mit einer Pendelklappe 24 sowie einen Eingang 25 für die Zufuhr von Stickstoff auf. Schließlich ist noch oberhalb der Überlaufkante 16 des Aufnahmebehälters 1 innerhalb des Gassammelraums ein Sicherheitsüberlauf 26 vorgesehen.

Dem Aufnahmebehälter 1 wird über das Zulaufrohr 4 eine elektrolytische Flüssigkeit mit Überschuß freier Säure bspw. Schwefelsäure zugeführt, die durch den Siebzwischenboden 2, 3 hindurchtretend, die auf diesem aufliegende Füllung F von Zinkpartikeln bspw. in Form von Granulat oder Pellets durchströmt und den Auflösungsprozeß des Zinks bewirkt. Die mit Zinkionen angereichterte elektrolytische Flüssigkeit strömt über die Überlaufkante 16 in die Körbe 15 in die Schüttung aus Glas- bzw. Kunststoffkugeln, und von dort in die Überlaufkammer 13. Die Schüttung filtert dabei nicht aufgelöste Zinkpartikel und unlösliche Schmutzpartikel aus der Flüssigkeit heraus, wobei sich infolge der weiteren Beaufschlagung der Kugeln durch die elektrolytische Flüssigkeit die verbliebenen Zinkpartikel noch auflösen.

Die Körbe 15 mit der Kugelschüttung werden von Zeit zu Zeit herausgehoben und die Schüttung durch Spülen mit Wasser oder anderen Spülflüssigkeiten gereinigt. Das im Gassammelraum 17 gesammelte Gas (Wasserstoff) wird über die Absaugleitung 18 abgesaugt und durch den entstehenden Unterdruck gelangt Frischluft über die Frischluftzufuhrleitung 23 in den Gassammelraum 17, dabei öffnet sich die Pendelklappe 24 nach innen. Zur Überwachung der Gaskonzentration ist im Gassammelraum 17 noch eine Meßsonde 27 angeordnet, die, nicht dargestellte Stelleinrichtungen beeinflußt, die ggfs. die weitere Zufuhr von elektrolytischer Flüssigkeit über das Zulaufrohr 4 mit Hilfe des Absperrschiebers 5 stoppt. Dabei kann bis zur vollständigen Beendigung des Zinkauflösevorgangs über den Eingang 25 Stickstoff in den Gassammelraum 17 eingebracht werden.

Für das Einbringen einer neuen Zinkfüllung wird der in Fig. 2 dargestellte, mit frischen Zinkpartikeln gefüllte Füllbehälter 21, nachdem die Verschlußklappe 20 der Schleusenkammer 19 bei geschlossenem Schleusenschieber 28 in die strichpunktiert wiedergegebene Position geklappt wurde, auf die Schleusenkammer 19 aufgesetzt und die Füllung durch Öffnen der Entleerklappen 22 in die Schleusenkammer 19 eingebracht. Nach Abheben des leeren Füllbehälters 21 wird die verschlußklappe 2 geschlossen und der Schleusenschieber 28 geöffnet, worauf die Füllung in den Aufnahmebehälter 1 gelangt.

Zur Überwachung der jeweiligen Füllung F im Aufnahmebehälter 1 wird dessen Gewicht über die Druckmeßdosen 11 ermittelt und über nicht dargestellte Prüf- und Vergleichseinrichtungen überwacht.

Von Zeit zu Zeit kann die Füllung F durch Einblasen von Stickstoff über den Blasdüsensatz 6 aufgelockert werden.

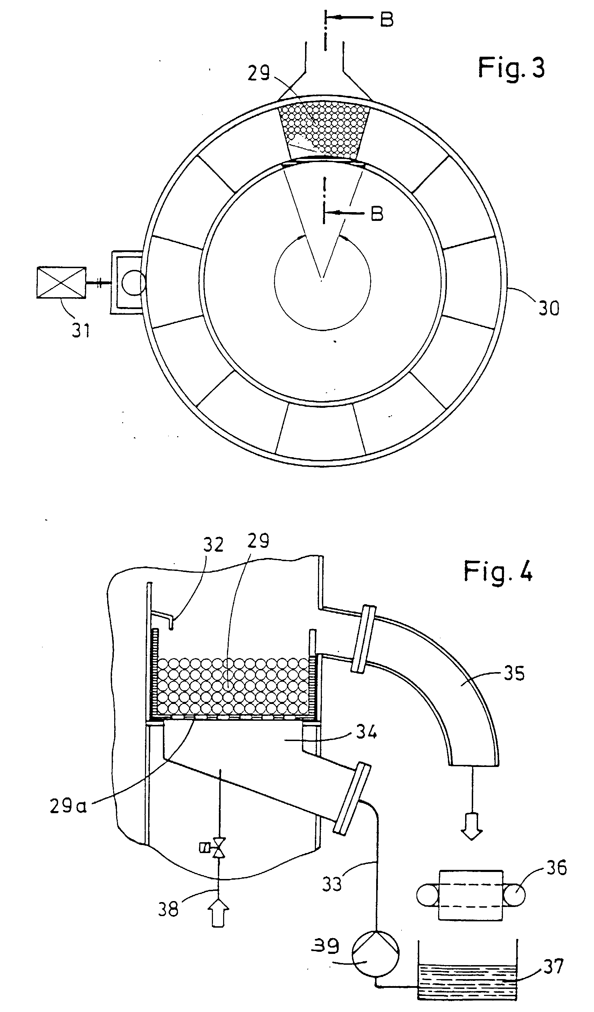

Beim Ausführungsbeispiel nach Fig. 3 sind statt der Körbe Ringkammern 29 vorgesehen, die gemeinsam auf einem Karussellträger 30 angeordnet sind und, vgl. Fig. 4, Siebböden 29a aufweisen. Angetrieben durch einen Motor 31 gelangen die Ringkammern 29 nacheinander in die in Fig. 4 wiedergegebene Reinigungsposition, in der ein Überlaufwehr 32 das Überlaufen von elektrolytischer Flüssigkeit in die Ringkammer 29 verhindert. Über die Pumpe 39 und die Zuleitung 33 wird eine Spülflüssigkeit in die Spülkammer 34 und von dort durch den Siebboden 29a in die Ringkammer 29 auf die darin befindliche Kugelschüttung gebracht. Die mit Schmutz beladene Spülflüssigkeit gelangt dann über den Ablauf 35 über ein Schwerkraftfilter 36 in den Tank 37. Mit Hilfe einer Stickstoffzufuhreinrichtung 38 kann die Beaufschlagung der Kugelschüttung verbessert werden.

### Bezugszeichen-Liste

- 1: Aufnahmebehälter
- 1a: unterer Bereich (des Aufnahmebehälters)
- 2: Zwischenboden
- 3: Siebauflage
- 4: Zulaufrohr
- 5: Abgasschieber
- 6: Blasdüsensatz
- 7: Zufuhrleitung
- 8: Absperrschieber
- 9: -
- 10: Ringtraverse
- 11: Druckmeßdosen
- 12: Tragbalken
- 13: Überlaufkammer
- 14: Ablauf
- 15: Körbe
- 16: Überlaufkante
- 17: Gassammelraum
- 18: Absaugleitung
- 19: Schleusenkammer
- 20: Verschlußklappe
- 21: Füllbehälter
- 22: Entleerklappen
- 23: Frischluftzufuhreingang
- 24: Pendelklappe
- 25: Eingang
- 26: Sicherheitsüberlauf
- 27: Meßsonde
- 28: Schleusenschieber
- 29: Ringkammer
- 29a: Siebboden
- 30: Karussellträger
- 31: Motor
- 32: Überlauf
- 33: Zuleitung
- 34: Spülkammer
- 35: Ablauf
- 36: Schwerkraftfilter
- 37: Tank
- 38: Stickstoffzufuhreinrichtung
- 39: Pumpe
- F: Füllung

## Patentansprüche

1. Vorrichtung zur Auflösung von Zink mittels säurehaltiger flüssiger Elektrolyten mit einem Aufnahmebehälter für die aufzulösenden Zinkpartikel und Zu- und Abflußeinrichtungen für kontinuierliches Ein- und Ausbringen frischem bzw. zinkangereichertem Elektrolyten sowie Auffang- und Ableiteinrichtungen für die, bei der Zinkauflösung entstehenden Gase, wie Wasserstoff
**dadurch gekennzeichnet,**
dass der Aufnahmebehälter (1) in Form eines oben offenen Topfes, in seinem unteren Bereich (1a) einen Siebzwischenboden (2,3) zur Auflage der Zinkpartikel-Füllung und unterhalb des Siebzwischenbodens (2,3) die Zuflußeinrichtung (4,5) für den frischen Elektrolyten und am oberen Öffnungsrand einen Überlauf (16) für den zinkangereicherten Elektrolyten und außen unter diesem Überlauf, den Topf umfassende Filter- (15) und Auffangbehälter (13) sowie einen, über diesem und der Topföffnung angeordneten Gassammelraum (17) mit Abzugseinrichtung (18) aufweist.

2. Vorrichtung nach Anspruch 1,
**dadurch gekennzeichnet,**
dass die Filter aus Körben (15, 29) mit Schüttungen von Glas- und/oder Kunststoffkugeln bestehen.

3. Vorrichtung nach Anspruch 2 mit einem zylindrischen Aufnahmebehälter,
**dadurch gekennzeichnet,**
dass der Auffangbehälter (13) und die Körbe (15,29) segment- bzw. ringförmig um den Außenumfang des Aufnahmebehälters (1) angeordnet sind.

4. Vorrichtung nach den Ansprüchen 2 und 3,
**dadurch gekennzeichnet,**
dass korbförmige Ringkammern (29) mit Siebböden (29a) drehangetrieben auf einem Karusellträger (30) angeordnet, nacheinander einer Entleer- und dann einer Füllstation für die Kugelschüttung zugeführt werden.

5. Vorrichtung nach einem oder mehreren der Ansprüche 2 bis 4,
**gekennzeichnet durch**
eine, zwischen Entleer- und Füllstation angeordnete Reinigungsspüleinrichtung für die Kugelschüttung.

6. Vorrichtung nach Anspruch 5,
**gekennzeichnet durch**
durch eine, die Kugelschüttung in den Ringkammern (29) in einer Reinigungsposition beaufschlagende Spüleinrichtung (32, 33, 34).

7. Vorrichtung nach Anspruch 6,
**gekennzeichnet durch,**
ein, im Bereich der Reinigungsspüleinrichtung an dem Überlauf 16 angeordnetes Überlaufwehr (32).

8. Vorrichtung nach Anspruch 6,
**gekennzeichnet durch,**
eine, der Reinigungsspüleinrichtung (32, 33, 34) zugeordnete Stickstoffzufuhrleitung (38).

9. Vorrichtung nach Anspruch 1,
**gekennzeichnet durch**
eine, in dem Gassammelraum (17) angeordnete, die Konzentration des gesammelten Gases messende, die Zufuhr des frischen Elektrolyten über Stelleinrichtungen (4,5) beeinflussende Meßsonde (27).

10. Vorrichtung nach Anspruch 1,
**gekennzeichnet durch**
eine, in den Gassammelraum eingeführte Stickstoffzuführleitung (25).

11. Vorrichtung nach Anspruch 9,
**gekennzeichnet durch**
durch einen, dem Gassammelraum (17) zugeordneten Frischluftzufuhreingang mit einer, sich nach innen öffnenden Pendelklappe (24).

12. Vorrichtung nach Anspruch 1,
**gekennzeichnet durch**
durch eine über dem Aufnahmebehälter (1) am Gassammelraum (17) angeordnete Schleuseneinrichtung (19, 20, 28) für einen, auf diese aufsetzbaren beweglichen Füllbehälter (21) für, dem Aufnahmebehälter (1) zuzuführende Zinkpartikel-Schüttungen.

13. Vorrichtung nach Anspruch 1,
**gekennzeichnet durch**
einen, unterhalb des Siebzwischenbodens (2,3) im Aufnahmebehälter (1) angeordneten Blasdüsensatz (6) für das Einblasen von Stickstoff.

14. Vorrichtung nach Anspruch 1,
**dadurch gekennzeichnet,**
dass der Aufnahmebehälter (1) auf Druckmessdosen (11) aufgesetzt ist, die Prüf- und Vergleichseinrichtungen beeinflussen, die die Größe der Füllung (F) des Aufnahmebehälters (1) überwachen.

## Claims

1. Device for dissolving zinc by means of liquid electrolytes containing acid, with a receiving container for the zinc particles to be dissolved and inflow and outflow devices for continuous bringing in and taking out of fresh or zinc-enriched electrolytes as well as catching and discharge devices for the gases, such as hydrogen, arising during the zinc dissolution, characterised thereby that the receiving container (1) in the form of an upwardly open pot has in its lower region (1a) a sieve intermediate base (2, 3) for support of the zinc particle filling and below the sieve intermediate base (2, 3) the inflow device (4, 5) for the fresh electrolytes and at the upper opening rim an overflow (16) for the zinc-enriched electrolytes and outside and below this overflow a filter container (15) and catching container (13) surrounding the pot, as well as a gas collecting chamber (17), which is arranged above those containers and the pot opening, with take-off equipment.

2. Device according to claim 1, characterised thereby that the filters consist of baskets (15, 29) with fillings of glass balls and/or plastics material balls.

3. Device according to claim 2 with a cylindrical receiving container, characterised thereby that the catching container (13) and the baskets (15, 29) are arranged in segment or ring shape around the outer circumference of the receiving container (1).

4. Device according to claims 2 and 3, characterised thereby that basket-shaped annular chambers (29) with sieve bases (29a) are arranged on a carousel carrier (30) to be rotationally driven and are fed in succession to an emptying station and then a filling station for the ball filling.

5. Device according to one or more of claims 2 to 4, characterised by a cleaning rinsing device, which is arranged between the emptying station and filling station, for the ball filling.

6. Device according to claim 5, characterised by a rinsing device (32, 33, 34) acting on the ball filling in the annular chambers (29) in a cleaning position.

7. Device according to claim 6, characterised by an overflow weir (32) arranged in the region of the cleaning rinsing device at the overflow (16).

8. Device according to claim 6, characterised by a nitrogen feed duct (38) associated with the cleaning rinsing device (32, 33, 34).

9. Device according to claim 1, characterised by a measuring probe (27) which is arranged in the gas collecting chamber (17), measures the concentration of the collected gas and influences the feed of the fresh electrolytes by way of setting devices (4, 5).

10. Device according to claim 1, characterised by a nitrogen feed duct (25) inserted into the gas collecting chamber.

11. Device according to claim 9, characterised by a fresh air feed entry, which is associated with the gas collecting chamber (17), with a pendulating flap opening inwardly.

12. Device according to claim 1, characterised by a charging device (19, 20, 28), which is arranged above the receiving container (1) at the gas collecting chamber (17), for a movable filling container (21), which is placeable on the charging device, for zinc particle fillings to be fed to the receiving container (1).

13. Device according to claim 1, characterised by a blast nozzle set (6), which is arranged below the sieve intermediate base (2, 3) in the receiving container (1), for the blowing-in of nitrogen.

14. Device according to claim 1, characterised thereby that the receiving container (1) is placed on pressure measuring cells, which influence checking and comparison devices which monitor the size of the filing (F) of the receiving container (1).

## Revendications

1. Appareil pour la dissolution de zinc au moyen d'électrolytes liquides contenant de l'acide, comprenant un réservoir de réception pour les particules de zinc à dissoudre, et des dispositifs d'amenée et de sortie pour amener et sortir en continu de l'électrolyte frais et de l'électrolyte enrichi en zinc, ainsi que des dispositifs de captage et d'évacuation pour les gaz qui apparaissent lors de la dissolution du zinc, comme de l'hydrogène,
caractérisé en ce que
le réservoir de réception (1), sous forme d'un pot ouvert vers le haut, comporte dans sa région inférieure (1a) un fond intermédiaire de tamisage (2, 3) pour supporter le remplissage de particules de zinc, et au-dessous du fond intermédiaire de tamisage (2, 3), il comporte le dispositif d'amenée (4, 5) pour l'électrolyte frais, et à la bordure supérieure de l'ouverture un déversoir (16) pour l'électrolyte enrichi en zinc, et à l'extérieur au-dessous de ce déversoir, un récipient de filtrage (15) et de collecte (13) qui entoure le pot, ainsi qu'une chambre de collecte de gaz (17) agencée au-dessus de celui-ci et au-dessus de l'ouverture du pot, dotée d'un dispositif d'évacuation (18).

2. Appareil selon la revendication 1,
caractérisé en ce que les filtres sont constitués par des corbeilles (15,29) avec des garnissages de billes de verre et/ou de matière plastique.

3. Appareil selon la revendication 2, avec un réservoir de réception cylindrique,
caractérisé en ce que le récipient de collecte (13) et les corbeilles (15, 29) sont agencés sous forme de segments ou sous forme annulaire autour de la périphérie extérieure du réservoir de réception (1).

4. Appareil selon les revendications 2 et 3,
caractérisé en ce que des chambres annulaires en forme de corbeille (24) avec des fonds de tamisage (29a) sont agencées sur un support à carrousel (30) avec un entraînement en rotation, et sont amenées les unes après les autres à une station de vidange puis à une station de remplissage pour le garnissage de billes.

5. Appareil selon l'une ou plusieurs des revendications 2 à 4,
caractérisé par un dispositif de rinçage et de nettoyage pour le garnissage de billes, agencé entre la station de vidange de la station de remplissage.

6. Appareil selon la revendication 5,
caractérisé par un dispositif de rinçage (32, 33, 34) qui concerne le garnissage de billes dans les chambres annulaires (29) dans une position de nettoyage.

7. Appareil selon la revendication 6,
caractérisé par un barrage de déversoir (32) agencé dans la région du dispositif de rinçage et de nettoyage au niveau du déversoir (16).

8. Appareil selon la revendication 6,
caractérisé par une conduite d'amenée d'azote (38) associée au dispositif de rinçage et de nettoyage (32, 33, 34).

9. Appareil selon la revendication 1,
caractérisé par une sonde de mesure (27), agencée dans la chambre de collecte de gaz (17), qui mesure la concentration des gaz recueillis et qui influence l'admission d'électrolyte rais, à l'aide de dispositifs de réglage (4, 5).

10. Appareil selon la revendication 1,
caractérisé par une conduite d'amenée d'azote (25) introduite dans la chambre de collecte de gaz.

11. Appareil selon la revendication 9,
caractérisé par une entrée d'admission d'air frais, associée à la chambre de collecte de gaz (17), dotée d'un clapet pendulaire (24) qui s'ouvre vers l'intérieur.

12. Appareil selon la revendication 1,
caractérisé par un dispositif à sas (19, 20, 28) agencé au-dessus du réservoir de réception (1) dans la chambre de collecte de gaz (17) pour un récipient de remplissage mobile (21) susceptible d'être posé sur ce dispositif à sas, destiné au remplissage de particules de zinc à amener au réservoir de réception (1).

13. Appareil selon la revendication 1,
caractérisé par un groupe de buses de soufflage (6) agencé au-dessous du fond intermédiaire de tamisage (2, 3) dans le réservoir de réception (1) pour le soufflage d'azote.

14. Appareil selon la revendication 1,
caractérisé en ce que le réservoir de réception (1) est posé sur des cellules de mesure de pression (11), lesquelles influencent des dispositifs de vérification et de comparaison, lesquels surveillent la taille du remplissage (F) du réservoir de réception (1).
